# EUROPEAN PATENT APPLICATION

(11) **EP 1 006 672 A2**
(43) Date of publication of application: **07.06.2000**
(21) Application number: 99122623.4
(22) Date of filing: 13.11.1999
(51) Int. Cl.: H04B 3/23

(54) **Integrated echo canceller and programmable compression encoder/decoder**

(30) Priority: 30.11.1998 US 110255 P; 03.09.1999 US 389802
(71) Applicant: Infineon Technologies North America Corp., San Jose, CA 95112-6000 (US)
(72) Inventor: Hogl, Erik, Santa Clara,CA 95051 (US); Fiedler, Ulrich, Santa Clara,CA 95050 (US)
(74) Representative: Patentanwälte Westphal, Mussgnug & Partner

(57) **Abstract**

A combination echo canceller and compression encoder/decoder. Each compression encoder/decoder has a number of channels which are individually programmable to select a companding law used to make a conversion of a telephone signal between a compressed format and a linear format and vice versa. By individually programming the channels, a single echo canceller and encoder/decoder can receive telephone signals from and transmit signals to regions that utilize different companding laws.

## Description

### Related Application

This application claims the benefit of U.S. Provisional Application Serial No. 60/110,255 filed November 30, 1998.

### Field of the Invention

The present invention relates to telecommunication equipment in general, and in particular to echo cancellers and digital compression encoders/decoders.

### Background of the Invention

In any telecommunication system where telephone signals are transmitted long distances or between devices having different impedances, echoes in the signal can occur. To remove these signals, echo cancellers are placed in the telephone lines to sample an incoming telephone signal received from a user, calculate an echo estimate and subtract the echo estimate from a telephone signal being directed back to a user, in order to remove any echo.

In modem telephone networks, most telephone signals are digitized and encoded prior to transmission. The particular scheme for compressing such signals is not universal and varies from country to country. The most common compression schemes are referred to as A-law and T-law. When telephone signals are transmitted between countries that utilize different companding laws, a conversion must take place. Because a compressed telephone signal must be converted to a linear format before an echo canceller can remove an echo signal, most echo cancellers are combined with compression encoders/decoders which operate to change the law or scheme with which a telephone signal is compressed.

In the past, compression encoders/decoders only had the ability to perform a single type of conversion. That is, a set of telephone signals encoded with the A-law could be globally converted to the T-law or vice versa. Therefore, such converters had to be placed where all incoming and outgoing telephone signals were encoded according to the same companding law. If telephone signals were received from countries where the signals were encoded with different laws, additional encoders/decoders and extra routing of the signals had to be performed.

### Summary of the Invention

To provide more flexibility in the manner in which telephone signals are routed in telephone equipment that receives telephone signals from, and transmits telephone signals to locations that utilize different companding laws, the present invention is an echo converter that includes a number of programmable compression encoders/decoders that receive signals on a number of channels. A telephone signal on each channel can be encoded or decoded according to a programmed selection of a companding law. A controller dictates which law is used in each channel of the converter. Preferably, the converters are programmed by the controller by supplying an address of an appropriate look-up table that is specific to the particular companding law selected in order to convert a digitally compressed telephone signal to a linear telephone signal and vice versa.

### Brief Description of the Drawings

FIGURE 1 is an environmental view of a telephone system that transmits telephone signals between countries that use different companding laws;
FIGURE 2 is a block diagram of a prior art echo canceller and compression encoder/decoder;
FIGURE 3 is a block diagram of a combination echo canceller and compression encoder/decoder according to the present invention; and
FIGURES 4A and 4B are flow charts showing operation of the combination echo canceller and compression encoder/decoder according to the present invention.

### Detailed Description of the Preferred Embodiment

As indicated above, the present invention is a combination echo canceller and compression encoder/decoder that can individually control the selection of a companding law used to convert each telephone signal applied to the encoder/decoder.

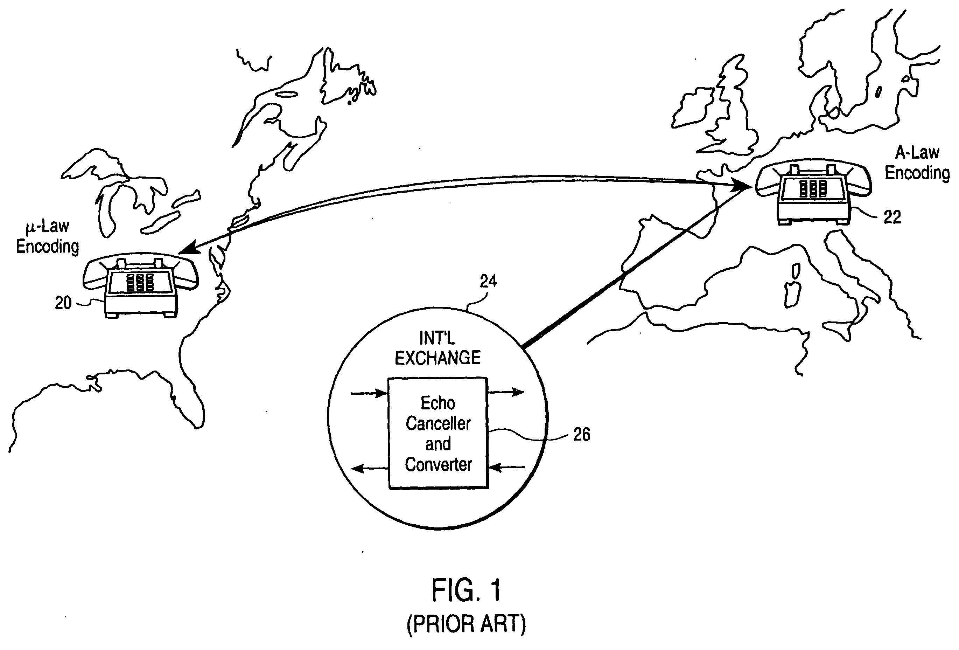

FIGURE 1 illustrates an environmental view of a communication system, whereby a telephone signal that originates from a near end telephone 20 is transmitted to a far end telephone 22. The near end telephone is digitized and compressed or companded with a companding law prior to its transmission. If the telephone 20 is located in the United States, the compression is typically performed according to the T-law. If the far end telephone 22 is in Europe, the telephone signal is compressed according to the A-law. Disposed between the near end telephone 20 and the far end telephone 22 is an international exchange 24 that routes the call. Typically, the international exchange includes an echo canceller 26 that removes echoes created by the distance between the near end telephone 20 and the far end telephone 22. In addition, the echo canceller also includes a compression encoder/decoder that operates to translate a telephone signal between the T-law used at the near end and the A-law used at the far end. As described above, one of the problems associated with the prior art compression encoders/decoders was that all conversions had to be performed on a global basis. That is, all telephone signals coming into the encoder/decoder had to be converted according to the same companding law. If telephone signals were received at the converter from countries that utilize different companding laws, then they would have to be routed to different echo cancellers and compression encoders/decoders designed for the correct companding law. Therefore, additional hardware and unnecessary redundancy was included in the international exchange.

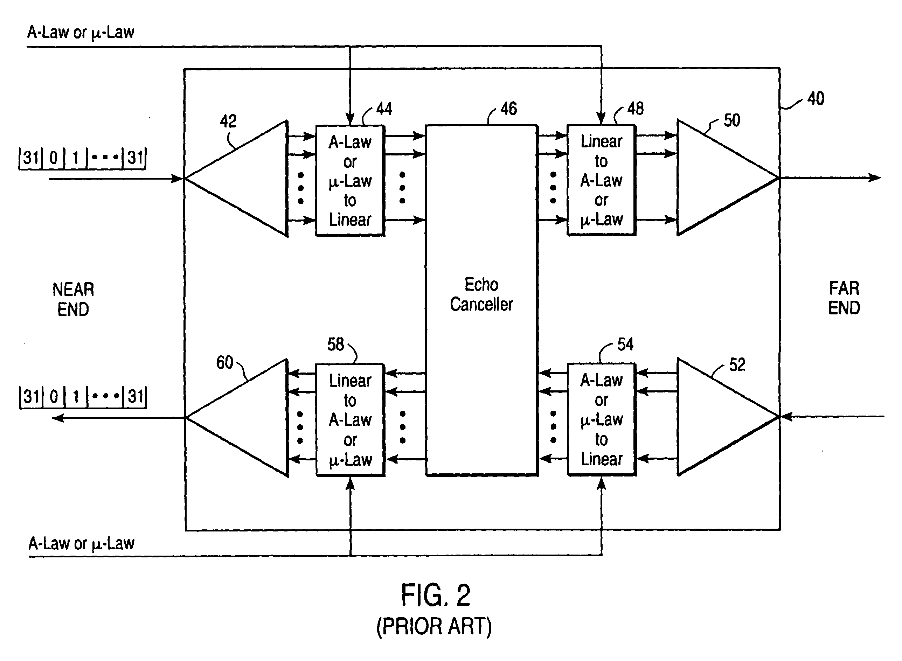

A block diagram of a prior art echo canceller and compression encoder/decoder 40 is shown in FIGURE 2. The echo canceller and encoder/decoder 40 receives telephone signals from the near end telephone 22. Typically, these telephone signals are multiplexed onto a single telephone line and are de-multiplexed onto individual telephone lines by a de-multiplexer 42. The output of the de-multiplexer 42 feeds a compression encoder/decoder 44 that operates to convert the telephone signals from a compressed digital format to a linear format. The output of the encoder/decoder 44 is applied to inputs of an echo canceller 46. The telephone signals destined for a far end telephone are output from the echo canceller and applied to inputs of a compression encoder/decoder 48 which converts the signals from a linear format back to a compressed format. The outputs of the compression encoder/decoder 48 are fed to a multiplexer 50 that combines each of the signals onto a single telephone line directed to the far end. Telephone signals received from the far end are applied to a de-multiplexer 52 that separates each of the multiplexed telephone signals and applies them to individual telephone lines. Each of the telephone lines is applied to a compression encoder/decoder 54, where the signals are decompressed from a selected companding law to a linear format. Outputs of the echo canceller 46 that are directed to the near end are applied to an input of a compression encoder/decoder 58 where the signals are compressed according to a selected companding law and then applied to a multiplexer 60 that combines the signals onto a single telephone line for transmission to the near end.

As described above, the prior art compression encoders/decoders 44, 48, 54, and 58 could only encode or decode all the telephone signals applied to the encoder/decoder according to the same companding law. Typically, there are 32 telephone lines applied to each encoder/decoder and all 32 telephone lines would need to be encoded or decoded according to the same law. The particular companding law selected was usually set by a logic signal applied to each of the encoders/decoders. Therefore, the combination echo canceller and compression encoder/decoder 40 shown in FIGURE 2 could not be used to receive telephone signals that are encoded according to different laws, or for transmitting telephone signals to countries that utilize different companding laws.

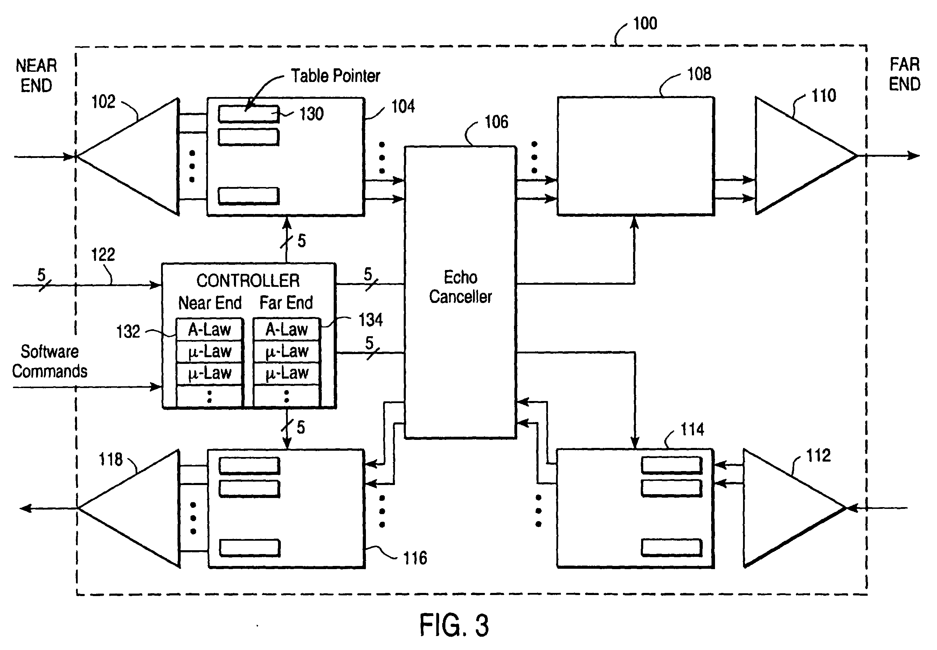

FIGURE 3 illustrates a combination echo canceller and compression encoder/decoder that is constructed according to the present invention. The echo canceller and compression encoder/decoder 100 receives telephone signals on a single telephone line from a near end source and applies them to a de-multiplexer 102 that separates out each individual telephone signal and applies it to individual telephone lines. Each of the telephone lines from the de-multiplexer 102 feeds a separate channel of a programmable compression encoder/decoder 104. Each channel of the compression encoder/decoder 104 is individually programmable to select the companding law to be used with the telephone signal applied to that particular channel. The compression encoder/decoder 104 operates to convert the telephone signals from a digital compressed format to a digital linear format for application to an echo converter 106. An output of the echo converter 106 is applied to a programmable compression encoder/decoder 108 having a number of channels. Again, each channel is individually programmed to select a companding law used to encode the telephone signals in that particular channel. The output of the compression encoder/decoder 108 is applied to a multiplexer 110 that combines all the telephone signals onto a single telephone line for transmission to the far end destinations.

Telephone signals received on a single telephone line from the far end destinations are applied to a de-multiplexer 112 that separates out each telephone signal and applies them to individual telephone lines which are again applied to a programmable compression encoder/decoder 114. Each channel of the compression encoder/decoder 114 converts the telephone signal from a digitally compressed format to a linear format and applies the linear telephone signals to the echo canceller 106. The outputs of the echo canceller 106 are applied to a number of channels of a programmable compression encoder/decoder 116 that convert the telephone signals from a linear format to a selected compressed format using a companding law that is selected for each particular channel. The output of the compression encoder/decoder 116 is fed to a multiplexer 118 that combines the signals onto a single telephone line for transmission to the near end subscriber.

As indicated above, each channel of the compression encoders/decoders 104, 110, 112, and 116 is independently programmable to select the companding law that is used to encode/decode a telephone signal. Controlling the encoders/decoders is a controller 120 that receives software commands from a processing circuit (not shown) that set up the parameters for each telephone call. In addition, logic signals received from circuits that supply the actual telephone signals are applied on a set of pins 122 in order to allow the hardware units to select the particular companding law used to encode or decode a telephone signal. In the presently preferred embodiment of the invention, each channel of the converters includes a register 130 that contains a pointer to a look-up table in a memory that specifies the conversion between a particular sample of the telephone signal that is encoded according to the selected companding law and a corresponding sample encoded in a linear format. The selection of the particular companding law used for the telephone signals in a channel is made by selecting the correct look-up table for that desired companding law.

Because each channel of the compression encoders/decoders is individually programmable, it is possible to receive telephone signals from either the near end or far end that are encoded according to different companding laws with the same echo canceler and compression encoder/decoder. A series of registers 132 and 134 in the controller 120 allow the controller 120 to control the particular companding law used for each channel of the compression encoders/decoders 104, 110, 112, and 116. It will be appreciated that those channels on the same side of the echo canceller, i.e., that receive telephone signals from and direct signals to the same user at the near end or far end, are programmed to utilize the same companding law for decoding and encoding the telephone signals.

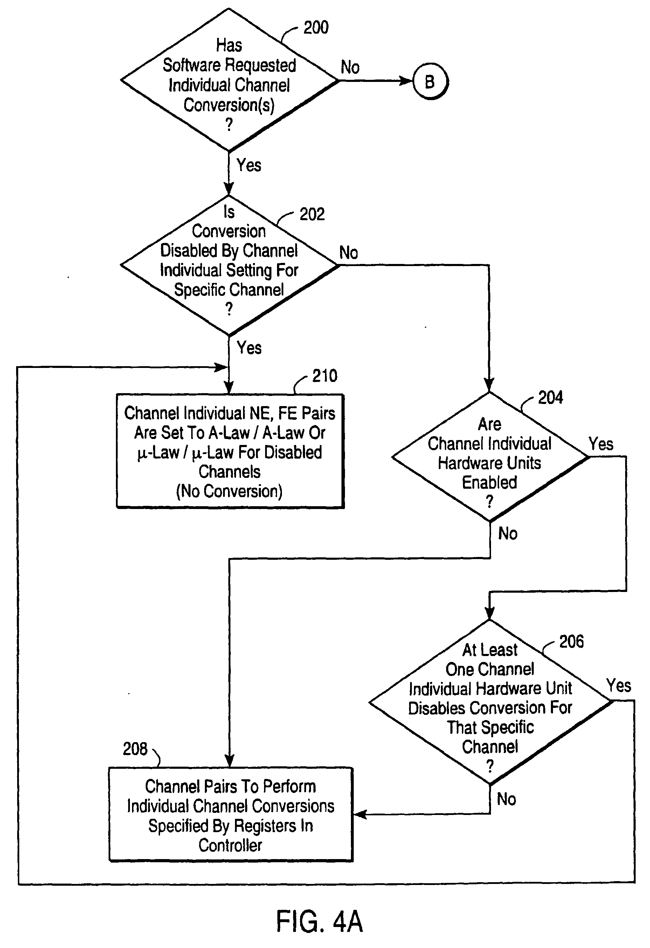

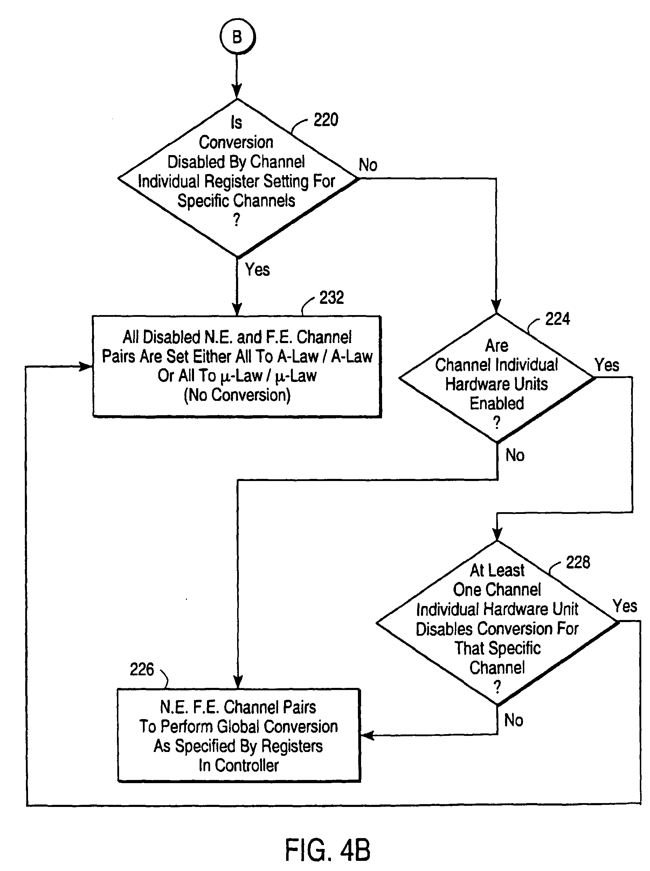

FIGURES 4A and 4B are flow charts illustrating the method by which the programmable echo canceller and compression encoder/decoder of the present invention operates. As indicated above, the controller 120 receives software commands from a processor in charge of setting up a call and logic signals from individual hardware units that supply the telephone signals to the compression encoders/decoders in order to select the type of conversion necessary for each channel. The software commands or hardware units may require individual channels to be encoded or decoded with a particular companding law. Alternatively, the software commands or hardware units may require that all channels of the compression encoders/decoders utilize the same companding law. Beginning with the step 200, the controller 120 determines whether a software command has been received that requests that an individual channel be converted according to a selected companding law. If the answer to step 200 is no, processing proceeds according to the steps shown in FIGURE 4B described below.

If a software command has requested an individual channel to be converted according to a selected companding law, the controller 120 determines at a step 202 whether conversion is disabled for specific channels by channel individual register settings. Step 202 operates as a check to confirm whether the converters are disabled by software sources. If the answer to step 202 is yes, an individual channel is to be compressed with a selected companding law identical for near end and far. If the answer to step 202 is no, the controller 120 determines at a step 204 whether the input signals from hardware units to the echo canceller and compression encoders/decoders are enabled. If the answer to step 204 is yes, then the controller 120 determines at a step 206 whether at least one hardware unit requests an individual channel to be disabled. If the answer to step 206 is no, then the channel pairs on the near end and far end of the echo canceller and compression encoder/decoder operate to perform a channel individual conversion as specified by an appropriate register in the controller 120. If the answer to step 206 is yes, then processing proceeds to a step 210, wherein channel individual near end and far end pairs are set to utilize an identical companding law.

If the answer to step 204 is no, and the hardware units are not enabled, then the channel pairs are programmed to perform a channel individual conversion as specified by the registers in the controller 120 at a step 208 as described above.

If the answer to step 200 was no, and a software command had not requested an individual channel conversion, then processing proceeds at a step 220 as shown in FIGURE 4B. At step 220, the controller 120 determines whether a global conversion was disabled for specific channels by a software command. If the answer to step 220 is yes, then all disabled near end and far end channel pairs are programmed to use the same companding law and no conversion is performed in these channels. If the answer to step 220 is no, then processing proceeds to a step 224, wherein the controller 120 determines if the hardware units that control the selection of a particular companding law to be utilized in the channels are enabled. If the answer to step 224 is no, then processing proceeds to a step 226 and all near end and far end channel pairs perform a global conversion as specified by the registers in the controller.

If the answer to step 224 is yes, then processing proceeds to a step 228, wherein the controller 120 determines if at least one hardware unit has requested disabling of specific channels. If the answer to step 228 is no, then processing proceeds to step 226 and the near end and far end channel pairs are programmed to perform a global conversion as specified by a register in the controller. If the answer to step 228 is yes, then processing returns to step 232 and all disabled channel pairs are programmed to utilize the same companding law at the near end and far end.

As can be seen from the above description, the present invention allows a single echo canceller and compression encoder/decoder to be used in environments where telephone calls are transmitted to and received from locations that use different companding laws on the near end and far end. The present invention provides more flexibility and reduces the need for additional hardware in telecommunication switching equipment.

The present invention is not limited for use in international exchange equipment but can be used in such devices as switching stations that transfer telephone calls between different formats, i.e., cellular to fixed network, at an interworking unit (IWU) that connects a public switched telephone network (PSTN) to an asynchronous transfer mode (ATM) network, or voice over IP gateway that connects a PSTN with an internet protocol (IP) network.

## Claims

The embodiments of the invention in which an exclusive property or privilege is claimed are defined as follows:

1. A combination echo canceller and compression encoder/decoder comprising:
an echo canceller that removes echoes from a number of telephone signals transmitted between a far end and a near end;
one or more compression encoders/decoders, each having a number of channels on which a telephone signal is received and decoded from a compressed format to a linear format and encoded from a linear format to a compressed format; and
a controller that individually controls each of the one or more compression encoders/decoders converter to select a type of compression used by each channel of the one or more compression encoders/decoders to encode/decode the telephone signals.

2. The combination echo canceller of Claim 1, wherein the telephone signals are multiplexed onto a combined telephone line between the near end and the far end, the system further comprising:
a pair of de-multiplexers that separate the telephone signals received on the single telephone line onto separate lines for supply to the channels of a compression encoder/decoder; and
a pair of multiplexers that receive the telephone signals on separate lines from a compression encoder/decoder and multiplex the telephone signals onto a combined telephone line.

3. The combination echo canceller of Claim 1, wherein the controller causes each channel of the one or more compression encoders/decoders to select either A-law or T-law as the type of compression.

4. The combination echo canceller of Claim 1, wherein each channel in the one or more compression encoders/decoders is programmed by the controller to select a look-up table associated with the type of compression in order to encode or decode a telephone signal.

5. The combination echo canceller and compression encoder/decoder of Claim 1, wherein the combination echo canceller and compression encoder/decoder is disposed between a wireless and a landline telephone network.

6. The combination echo canceller and compression encoder/decoder of Claim 1, wherein the combination echo canceller and compression encoder/decoder is disposed between a public switched telephone network and an asynchronous transfer mode network.

7. The combination echo canceller and compression encoder/decoder of Claim 1, wherein the combination echo canceller and compression encoder/decoder is disposed between a public switched telephone network and an internet protocol network.

8. A method of removing echoes from telephone signals transmitted between a near end and a far end, comprising:
receiving a series of telephone signals on a combined telephone line;
separating individual telephone signals from the combined telephone line;
applying each individual telephone signal to one or more compression encoders/decoders having a number of channels that convert an individual telephone signal from a selectable compressed format to a linear format;
programming each channel of the one or more compression encoders/decoders to select a companding law used to convert the telephone signal; and
supplying the linearly formatted telephone signals from each channel of the one or more compression encoders/decoders to an echo canceller to remove an echo from the telephone signals.

9. The method of Claim 8, wherein each channel of the one or more compression encoders/decoders is programmed by supplying each channel with an address of a selected look-up table that is specific to the selected companding law, the look-up table specifying a conversion between a compressed signal and a linearly formatted table.
